(19)

Europäisches
Patentamt
European
Patent Office
Office européen
des brevets

(11) **EP 4 389 799 A1**

(12) **EUROPEAN PATENT APPLICATION**
published in accordance with Art. 153(4) EPC

(43) Date of publication:
**26.06.2024  Bulletin 2024/26**

(21) Application number: **22871867.2**

(22) Date of filing: **15.09.2022**

(51) International Patent Classification (IPC):
**C08G 69/40** (2006.01)      **C08L 77/06** (2006.01)
**C08K 5/5313** (2006.01)      **C08K 5/3492** (2006.01)
**C08K 7/14** (2006.01)        **C08J 5/10** (2006.01)

(86) International application number:
**PCT/CN2022/118965**

(87) International publication number:
**WO 2023/045820 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **24.09.2021  CN 202111122743**

(71) Applicant: **Zhuhai Vanteque Specialty
Engineering
Plastics Co., Ltd.
Zhuhai City, Guangdong 519050 (CN)**

(72) Inventors:
• **YAN, Kun
  Guangdong 519050 (CN)**

• **XU, Xianjun
  Guangdong 519050 (CN)**
• **JIANG, Sujun
  Guangdong 519050 (CN)**
• **CAO, Min
  Guangdong 519050 (CN)**
• **MAI, Jiehong
  Guangdong 519050 (CN)**
• **YANG, Huixin
  Guangdong 519050 (CN)**
• **JIANG, Zhiqiang
  Guangdong 519050 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **FURAN DIACID-BASED POLYAMIDE, PREPARATION METHOD THEREFOR, AND FURAN DIACID-BASED POLYAMIDE COMPOSITION**

(57)     The present invention discloses a furan diacid-based polyamide, which is derived from the following repeating units: (A) 2,5-furandicarboxylic acid, (B) 1,4-cyclohexanedicarboxylic acid, and (C) 1,5-pentanediamine, where based on the total molar percentage of the diacid units, (A) accounts for 10-45 mol% of the diacid units. On one hand, by selecting a bio-based 2,5-furandicarboxylic acid, the furan diacid-based polyamide of the present invention is more environmentally friendly, and has the advantages of a melting point of 291-335°C and lower water absorption (a water absorption rate than that of a polyamide with the same amido bond density) ; on the other hand, the rigidity of cyclohexane is higher than that of an aromatic ring, such that more hard carbon layers can be formed during combustion. In addition, the furan diacid-based polyamide has a relatively high amido bond density, and can generate a relatively excellent synergistic effect with a flame retardant, such that the flame retardant effect is excellent under the synergistic effect of the two.

EP 4 389 799 A1

**Description**

**TECHNICAL FIELD**

The present invention relates to the technical field of high polymer materials, and in particular to a furan diacid-based polyamide and a furan diacid-based polyamide composition.

**BACKGROUND**

Traditional polyamide monomers are mainly derived from petroleum oil. Nowadays, people are being faced with the problems of excessive petroleum resource consumption, soared carbon dioxide emissions and aggravated greenhouse effect. The decrease of the petroleum-based monomer's consumption can inhibit the carbon dioxide emissions to prevent greenhouse effect, solve the problems of environmental pollution and resource shortage, thereby building a sustainable-development society. Bio-based high-temperature resistant polyamides refer to polyamides obtained from the polymerization of bio-based aliphatic diamines or bio-based arylcyclodiacids. The bio-based monomers are generally extracted from animals and plants, which, on the one hand, can achieve green and sustainable development, on the other hand, can diversify high-temperature resistant polyamide products, thus satisfying the demands of the more subdivisional industries.

Through market survey and analysis, the bio-based monomers decanediamine, pentanediamine and furandicarboxylic acid are regarded as the bio-based high-temperature resistant polyamide monomer materials which are most likely to achieve a substantive breakthrough. Decanediamine is derived from plant castor oil and has achieved mass production at home; but due to its higher price, the market competitiveness is weak. Pentanediamine is derived from glutamic acid fermentation and has achieved mass production at home; and the market competitiveness is good because of its lower price. Furandicarboxylic acid is the only one known bio-based arylcyclodiacid monomer which is most likely to achieve industrialization currently. The domestic and overseas studies on furandicarboxylic acid are being in the trial development stage at present.

Chinese patent application CN106536187A discloses a furan-based polyamide; the bio-based monomer 2,5-furandicarboxylic acid is used and the diamine is aliphatic diamine, aromatic diamine, etc.; the furan-based polyamide has good gas barrier properties. However, the gas barrier properties are mainly achieved by polymerizing a short carbon chain diamine (1,3 propane diamine) to increase the amido bond density. In contrast, such furan polyamide has poor flame retardance.

**SUMMARY**

The object of the present invention is to provide a furan diacid-based polyamide which has the advantages of good flame retardance, high melting point, bio-based environmental protection, and low water absorption rate.

Another object of the present invention is to provide a composition containing the aforesaid furan diacid-based polyamide.

The present invention is achieved by the following technical solution:

A furan diacid-based polyamide is derived from the following repeating units: (A) 2,5-furandicarboxylic acid, (B) 1,4-cyclohexanedicarboxylic acid, and (C) 1,5-pentanediamine, wherein based on a total molar percentage of the diacid units, (A) accounts for 10-45 mol% of the diacid units.

Preferably, based on a total molar percentage of the diacid units, (A) accounts for 10-30 mol% of the diacid units.

More preferably, based on a total molar percentage of the diacid units, (A) accounts for 10-15 mol% of the diacid units.

The melting point and water absorption rate are higher at a preferable content of the (A) in the diacid units.

The furan diacid-based polyamide has a relative viscosity of 1.8-2.4.

The furan diacid-based polyamide has a melting point of 291-335°C.

The furan diacid-based polyamide has water absorption rate of less than or equal to 3.3%.

Reaction materials (diamine and diacids) are added to a pressure reactor provided with magnetic coupling stirring, a condenser tube, a gas phase port, a feeding port, and a pressure explosion-proof port; benzoic acid, sodium hypophosphite (catalyst) and deionized water are added; the amount of benzoic acid is 2-3% of a total weight of diamine and diacid, the amount of sodium hypophosphite is 0.05-0.15% of a weight of other materials other than deionized water, and the amount of deionized water is 25-35% of a weight of the total materials; the pressure reactor is vacuumized and pumped with high-purity nitrogen as a shielding gas, and the materials are heated up to 210-230°C within 2 h under stirring conditions, and then a reaction mixture is stirred for 0.5-2 h at 210-230°C. The reactants are heated up to 220-240°C under stirring conditions, the reaction proceeds for 1-3 h at a constant temperature of 220-240°C and a constant pressure of 2.1-2.3 MPa; the pressure is kept constant by removing water formed; a prepolymer is discharged after finishing the reaction and vacuum dried at 70-90°C to obtain a prepolymerized product, and the prepolymerized product is subjected to solid phase viscosification for 8-12 h at 240-260°C and a vacuum condition of 40-60 Pa, to obtain the furan diacid-based polyamide.

A furan diacid-based polyamide composition includes the following components in parts by weight:

40-70 parts of the aforesaid furan diacid-based polyamide;
10-30 parts of a halogen-free flame retardant; and
0-50 parts of a reinforcing material.

The halogen-free flame retardant is selected from at least one of the group consisting of a phosphine flame retardant, a hypophosphorous acid ester flame retardant, a hypophosphorous acid salt flame retardant, a phosphinate ester flame retardant, a phosphinate salt flame retardant, a phosphite ester flame retardant, a phosphite salt flame retardant, a phosphine oxide flame retardant, a hypophosphite ester flame retardant, a hypophosphite salt flame retardant, a phosphonate ester flame retardant, a phosphonate salt flame retardant, a phosphate ester flame retardant, and a polyphosphate flame retardant.

The hypophosphite salt flame retardant is selected from at least one of the group consisting of aluminum hypophosphite, calcium hypophosphite, aluminum dimethylhypophosphite, aluminum diethylhypophosphite, and aluminum methylethylhypophosphite; the phosphate ester flame retardant is selected from at least one of the group consisting of bisphenol A bis(diphenyl phosphate), phenoxyphosphonitrile, resorcinol (diphenyl phosphate), triphenyl phosphate, melamine polyphosphate ester and melamine cyanurate; the polyphosphate flame retardant is selected from at least one of the group consisting of ammonium polyphosphate, melamine phosphate, melamine pyrophosphate and melamine polyphosphate salt.

The reinforcing material is selected from at least one of the group consisting of a fibrous filler and a nonfibrous filler; the fibrous filler is selected from at least one of the group consisting of a glass fiber, a carbon fiber, a basalt fiber, a bamboo fiber, fibrilia, a cellulosic fiber and an aramid fiber; the nonfibrous filler is selected from at least one of the group consisting of aluminium oxide, carbon black, clay, zirconium phosphate, kaolin, calcium carbonate, copper powder, kieselguhr, graphite, mica, silica, titanium dioxide, zeolite, talc, wollastonite, glass beads and glass powder.

The polyamide molding composition of the present invention may be used for preparing various types of electronic connector devices in needs of surface mount technology (SMT) such as USB, TYPE-C, and DDR, and widely applied in the fields such as electrical, electronic engineering, and automobile.

Compared with the prior art, the present invention has the following beneficial effects

1. Diacid units in the furan diacid-based polyamide of the present invention all contain rigid rings, of which cyclohexane has a rigidity higher than that of the aromatic ring and may form more hard carburized layers during combustion. Moreover, the polyamide resin of the present invention has a higher amido bond density and thus, may form an excellent synergistic effect with a fire retardant and accordingly has a good flame retardant efficiency.

2. In the present invention, the furan diacid-based polyamide prepared by adjusting the ratio of furandicarboxylic acid to cyclohexanedicarboxylic acid has a melting point of 291-335°C and thus, has good temperature tolerance and machinability.

3. Even though the furan diacid-based polyamide of the present invention has a high amido bond density (in comparison to PA10T, PA1010, PA6T, PA56, etc.), has a water absorption rate of less than or equal to 3.3%. This is because the monomers furandicarboxylic acid and cyclohexanedicarboxylic acid all contain rigid rings, of which cyclohexane has a rigidity higher than that of the aromatic ring. The polyamide molecular chain of the present invention has a very strong rigidity; the rigid region formed by these rigid molecular chains hinder the diffusion of water molecules in the polyamide resin; therefore, the water absorption rate is smaller and dimensional stability is better.

## DETAILED DESCRIPTION OF EMBODIMENTS

The present invention will be further specified in detail with reference to the detailed examples below. The following examples will help those skilled in the art further understand the present invention, but are not construed as limiting the present invention in any form. It should be indicated that those skilled in the art may further make several deformations and improvements without departing from the inventive concept of the present invention. These all fall within the protection scope of the present invention.

Raw materials used in the present invention are derived from the following:

2,5-furandicarboxylic acid: purity of 98%, purchased from Ningbo Institute of Materials Technology & Engineering, Chinese Academy of Sciences;

1,4-cyclohexanedicarboxylic acid: purity of 98%, purchased from Sigma-Aldrich;

1,6-hexanedioic acid: purity of 98%, purchased from Sigma-Aldrich;

Terephthalic acid: purity of 98%, purchased from Sigma-Aldrich;

1,5-pentanediamine: purity of 98%, purchased from Shanghai Kaisai Chemical Co., Ltd.;

1,6-hexamethylenediamine: purity of 98%, purchased from Sigma-Aldrich;

1,10-decanediamine: purity of 98%, purchased from Wuxi Yinda Nylon Co., Ltd.;

Benzoic acid: analytically pure, purchased from Sigma-Aldrich;

Sodium hypophosphite: analytically pure, purchased from Sigma-Aldrich;

Halogen-free flame retardant A: aluminum diethylphosphinate, OP1230, phosphorus mass percentage of 23-24%, purchased from Clariant;

Halogen-free flame retardant B: melamine polyphosphate salt, MELAPUR200-70, nitrogen mass percentage of 42-44%, phosphorus mass percentage of 12-14%, purchased from BASF; and

reinforcing material: glass fiber, ECS11-4.5-560A, mean diameter of 11 $\mu$m, purchased from JUSHI, China.

The polyamide resins in the examples and comparative examples were obtained by the same polymerization process below: reaction materials (diamine and diacids) were added to a pressure reactor provided with magnetic coupling stirring, a condenser tube, a gas phase port, a feeding port, and a pressure explosion-proof port according to the proportion in the table; benzoic acid, sodium hypophosphite (catalyst) and deionized water were added; the amount of benzoic acid was 2% of a total weight of diamine and diacid, the amount of sodium hypophosphite was 0.08% of a weight of other materials other than deionized water, and the amount of deionized water was 25% of a weight of the total materials; the pressure reactor was vacuumized and pumped with high-purity nitrogen as a shielding gas, and the materials were heated up to 230°C within 2 h under stirring conditions, and then a reaction mixture was stirred for 0.5-2 h at 220°C; reactants was then heated up to 240°C under stirring conditions; the reaction proceeded for 1-3 h at a constant temperature of 240°C and a constant pressure of 2.3 MPa; the pressure was kept constant by removing water formed; a prepolymer was discharged after finishing the reaction, and vacuum dried at 70-90°C to obtain a prepolymerized product, and the prepolymerized product was subjected to solid phase viscosification for 8-12 h at 260°C and a vacuum condition of 50 Pa, to obtain the furan diacid-based polyamide (or furan diacid-free polyamide).

Test method:

(1) Test method for the relative viscosity of polyamide resin: referring to GB 12006.1-89 Determination of viscosity number of polyamide; the specific test method is as follows: a relative viscosity $\eta$r of the polyamide having a concentration of 0.25 g/dl in 98% concentrated sulfuric acid at 25±0.01°C.

(2) Test method for the melting point of polyamide: referring to ASTM D3418-2003, Standard Test Method for Transition Temperatures of Polymers By Differential Scanning Calorimetry; the specific test method is as follows: the melting point of a sample was tested by a Perkin Elmer Dimond DSC analysis meter at the atmosphere of nitrogen and a flow rate of 50 mL/min; the sample was first heated up to 350°C at 20°C/min, and maintained for 2 min at 350°C; resin thermal history was removed, and then the sample was cooled to 50°C at 20°C/min and maintained for 2 min at 50°C, again heated up to 350°C at 20°C/min, and the endothermic peak temperature at this time was set as the melting point Tm.

(3) Water absorption rate of the polyamide: the sample was injected into 20 mm× 20 mm× 2 mm sample piece with a weight denoted as a0. The sample was then placed into 95°C water, and 240 h later, its weight was weighed and denoted as a1.

$$Water\ absorption\ rate=(a1-a0)/a0*100\%.$$

(4) Flame retardance: referring to the UL94 V-0 test standard, the standard strip-type sample has a length of 125±5 mm, a width of 13.0±0.5 mm and a thickness of 0.8 mm; 5 samples were at least treated for 48 h at 23±2°C and 50± 5%. Flame of a Bunsen burner was aligned at the center of the lower end of the sample; the center of the top surface of the Bunsen burner tube was kept 10±1 mm away from the lower end face of the sample for 10±0.5 S; the Bunsen burner was moved with the change of the length and position of the sample if necessary. Flame was applied to the test sample for 10±0.5 S, and the Bunsen burner was then immediately removed to at least 150 mm away from the test sample at about 300 mm/s. Meanwhile, flame combustion time T1 (unit: s) of the test sample was determined with a timing device. After the flame combustion of the test sample was over, even though the Bunsen burner was not removed to 150 mm away from the test sample, the Bunsen burner was immediately moved and kept 10±1 mm away from the lower end face of the sample, and fame was then applied again for 10±0.5 S; the Bunsen burner was removed to clear away drippings if necessary, and after flame application, the Bunsen burner was immediately removed to at least 150 mm away from the test sample; meanwhile, the timing device was turned on to determine the flame time T2 and flame-free time T3 of the test sample; if T1+T2+T3 of the 5 test samples in average was less than 10 s, and there was no dripping to ignite the lower cotton, it was regarded to meet the V-0 conditions.

Table 1: proportions of each monomer of the furan diacid-based polyamide resins in Examples 1-6 and test results thereof

|  | Example 1 | Example 2 | Example 3 | Example 4 | Example 5 | Example 6 | Example 7 | Example 8 |
|---|---|---|---|---|---|---|---|---|
| Resin No. | A | B | C | D | E | F | G | H |
| 2,5-furandicarboxyli c acid/mol | 10 | 15 | 20 | 30 | 40 | 45 | 25 | 25 |
| 1,4-cyclohexanedica rboxylic acid/mol | 90 | 85 | 80 | 70 | 60 | 55 | 75 | 75 |
| 1,5-pentanediamine/ mol | 100 | 100 | 100 | 100 | 100 | 100 | 100 | 100 |
| Relative viscosity η r | 2.14 | 2.13 | 2.18 | 2.12 | 2.11 | 2.13 | 1.82 | 2.36 |
| Melting point Tm/°C | 335 | 328 | 322 | 309 | 298 | 291 | 315 | 315 |
| Water absorption rate/% | 2.2 | 2.3 | 2.4 | 2.8 | 3.1 | 3.3 | 2.6 | 2.6 |

As can be seen from Examples 1-6, the higher the 1,4-cyclohexanedicarboxylic acid is, the higher the melting point is and the lower the water absorption rate is.

Continued table 1: proportions of each monomer of the polyamide resins in Comparative Examples 1-7 and test results thereof

|  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Resin No. | I | J | K | L | M | N | O |
| 2,5-furandicarboxy lic acid/mol | 5 | 50 |  |  | 40 | 40 | 40 |
| 1,4-cyclohexanedic arboxylic acid/mol | 95 | 50 | 60 |  |  |  | 60 |
| 1,6-hexanedioic acid/mol |  |  |  |  | 60 |  |  |
| Terephthalic acid/mol |  |  | 40 | 100 |  | 60 |  |
| 1,5-pentanediamin e/mol | 100 | 100 | 100 |  | 100 | 100 |  |

(continued)

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Resin No. | I | J | K | L | M | N | O |
| 1,6-hexamethylene diamine/mol | | | | | | | 100 |
| 1,10-decanediamine/mol | | | | 100 | | | |
| Relative viscosity $\eta r$ | 2.14 | 2.17 | 2.17 | 2.13 | 2.11 | 2.17 | 2.15 |
| Melting point Tm/°C | 351 | 280 | 307 | 317 | 261 | 282 | 289 |
| Water absorption rate/% | 2.1 | 4.0 | 3.4 | 1.6 | 7.3 | 3.8 | 3.1 |

The furan diacid-based polyamide resin in Comparative Example 1 has a melting point of greater than decomposition temperature and thus, has no use value.

As can be seen from Comparative Example 2, the higher the 2,5-furandicarboxylic acid is, the higher the water absorption rate is, the lower the melting point is, and the use value is low.

As can be seen from Comparative Example 3, when 2,5-furandicarboxylic acid is replaced with terephthalic acid, the water absorption rate may still not reach to 3.3% below.

As can be seen from Comparative Example 5, when cyclohexanedicarboxylic acid is replaced with adipic acid, the amido bond density decreases, while the water absorption rate increases.

As can be seen from Comparative Example 6, when cyclohexanedicarboxylic acid is replaced with terephthalic acid with the similar structure, the water absorption rate is also higher, and the melting point is low.

As can be seen from Comparative Example 7, when 1,5-pentanediamine is replaced with 1,6-hexamethylenediamine, the melting point decreases.

Table 3: proportions (part by weight) of each component of the furan diacid-based polyamide compositions in Examples 9-16 and Comparative Examples 8-14 and each performance test result thereof

| | Example 9 | Example 10 | Example 11 | Example 12 | Example 13 | Example 14 | Example 15 | Example 16 |
|---|---|---|---|---|---|---|---|---|
| Employed resin No. | A | B | C | D | E | F | G | H |
| Resin content | 58 | 58 | 58 | 58 | 58 | 58 | 40 | 70 |
| Halogen-free flame retardant A | 12 | 12 | 12 | 12 | 12 | 12 | 10 | |
| Halogen-free flame retardant B | | | | | | | | 20 |
| Reinforcing filler | 30 | 30 | 30 | 30 | 30 | 30 | 30 | 30 |
| UL-94 flame retardant rating | V-0 | V-0 | V-0 | V-0 | V-0 | V-0 | V-0 | V-0 |

As can be seen from Examples 7-12, the furan diacid-based polyamide composition of the present invention has good flame retardance.

Continued table 3:

| | Comparative Example 8 | Comparative Example 9 | Comparative Example 10 | Comparative Example 11 | Comparative Example 12 | Comparative Example 13 | Comparative Example 14 |
|---|---|---|---|---|---|---|---|
| Employed resin No. | I | J | K | L | M | N | O |
| Resin content | 58 | 58 | 58 | 58 | 58 | 58 | 58 |
| Halogen-free flame retardant | 12 | 12 | 12 | 12 | 12 | 12 | 12 |
| Reinforcing filler | 30 | 30 | 30 | 30 | 30 | 30 | 30 |
| UL-94 flame retardant rating | Fail to mold | Fail to mold | V-1 | V-1 | Fail to mold | V-1 | V-1 |

As can be seen from Comparative Examples 8-9, too high or too low melting point will lead to the failure of processing and molding.
As can be seen from Comparative Examples 10-14, the flame retardance is poor in other diacid/diamine solutions.

**Claims**

1. A furan diacid-based polyamide, **characterized in that**, it is derived from the following repeating units: (A) 2,5-furandicarboxylic acid, (B) 1,4-cyclohexanedicarboxylic acid, and (C) 1,5-pentanediamine, wherein based on a total molar percentage of the diacid units, (A) accounts for 10-45 mol% of the diacid units.

2. The furan diacid-based polyamide according to claim 1, wherein based on a total molar percentage of the diacid units, (A) accounts for 10-30 mol% of the diacid units.

3. The furan diacid-based polyamide according to claim 2, wherein based on a total molar percentage of the diacid units, (A) accounts for 10-15 mol% of the diacid units.

4. The furan diacid-based polyamide according to claim 1, wherein the furan diacid-based polyamide has a relative viscosity of 1.8-2.4.

5. The furan diacid-based polyamide according to claim 1, wherein the furan diacid-based polyamide has a melting point of 291-335°C.

6. The furan diacid-based polyamide according to claim 1, wherein the furan diacid-based polyamide has a water absorption rate of less than or equal to 3.3%.

7. A method for preparing the furan diacid-based polyamide according to any one of claims 1-6, **characterized in that**, the method comprises the following steps: adding reaction materials to a pressure reactor in proportion; and adding benzoic acid, sodium hypophosphite and deionized water, wherein the amount of benzoic acid is 2-3% of a total weight of diamine and diacid, the amount of sodium hypophosphite is 0.05-0.15% of a weight of other materials other than deionized water, and the amount of deionized water is 25-35% of a weight of the total materials; performing vacuumizing and pumping high-purity nitrogen as a shielding gas into the pressure reactor, heating up to 210-230°C within 2 h under stirring conditions, and mixing a reaction mixture for 0.5-2 h at 210-230°C; then heating reactants up to 220-240°C under stirring conditions, proceeding with reaction for 1-3 h at a constant temperature of 220-240°C and a constant pressure of 2.1-2.3 MPa, keeping the pressure constant by removing water formed, discharging a prepolymer after finishing the reaction, vacuum drying the prepolymer at 70-90°C to obtain a prepolymerized product, and performing solid phase viscosification on the prepolymerized product for 8-12 h at 240-260°C and a vacuum condition of 40-60 Pa, to obtain the furan diacid-based polyamide.

8. A furan diacid-based polyamide composition, **characterized in that**, the composition comprises the following components in parts by weight:

> 40-70 parts of the furan diacid-based polyamide according to any one of claims 1-6;
> 10-30 parts of a halogen-free flame retardant; and
> 0-50 parts of a reinforcing material.

9. The furan diacid-based polyamide composition according to claim 8, wherein the halogen-free flame retardant is selected from at least one of the group consisting of a phosphine flame retardant, a hypophosphorous acid ester flame retardant, a hypophosphorous acid salt flame retardant, a phosphinate ester flame retardant, a phosphinate salt flame retardant, a phosphite ester flame retardant, a phosphite salt flame retardant, a phosphine oxide flame retardant, a hypophosphite ester flame retardant, a hypophosphite salt flame retardant, a phosphonate ester flame retardant, a phosphonate salt flame retardant, a phosphate ester flame retardant, and a polyphosphate flame retardant; the hypophosphite salt flame retardant is selected from at least one of the group consisting of aluminum hypophosphite, calcium hypophosphite, aluminum dimethylhypophosphite, aluminum diethylhypophosphite, and aluminum methylethylhypophosphite; the phosphate ester flame retardant is selected from at least one of the group consisting of bisphenol A bis(diphenyl phosphate), phenoxyphosphonitrile, resorcinol (diphenyl phosphate), triphenyl phosphate, melamine polyphosphate ester and melamine cyanurate; and the polyphosphate flame retardant is selected from at least one of the group consisting of ammonium polyphosphate, melamine phosphate, melamine pyrophosphate and melamine polyphosphate salt.

10. The furan diacid-based polyamide composition according to claim 8, wherein the reinforcing material is selected from at least one of the group consisting of a fibrous filler and a nonfibrous filler; the fibrous filler is selected from at least one of the group consisting of glass fiber, carbon fiber, basalt fiber, bamboo fiber, fibrilia, cellulosic fiber and aramid fiber; and the nonfibrous filler is selected from at least one of the group consisting of aluminium oxide, carbon black, clay, zirconium phosphate, kaolin, calcium carbonate, copper powder, kieselguhr, graphite, mica, silica, titanium dioxide, zeolite, talc, wollastonite, glass beads and glass powder.

**INTERNATIONAL SEARCH REPORT**

| International application No. |
| --- |
| **PCT/CN2022/118965** |

### A. CLASSIFICATION OF SUBJECT MATTER

C08G 69/40(2006.01)i; C08L 77/06(2006.01)i; C08K 5/5313(2006.01)i; C08K 5/3492(2006.01)i; C08K 7/14(2006.01)i; C08J 5/10(2006.01)i

According to International Patent Classification (IPC) or to both national classification and IPC

### B. FIELDS SEARCHED

Minimum documentation searched (classification system followed by classification symbols)

C08G69, C08L77, C08K5, C08K7, C08J5

Documentation searched other than minimum documentation to the extent that such documents are included in the fields searched

Electronic data base consulted during the international search (name of data base and, where practicable, search terms used)

CNTXT; WPABS; WPABSC; ENTXTC; VEN; DWPI; CJFD; CNKI; Web of science; 谷歌, GOOGLE; STN: 金发科技股份有限公司, 珠海万通特种工程塑料有限公司, 阎昆, 徐显骏, 姜苏俊, 曹民, 麦杰鸿, 杨汇鑫, 蒋智强, 聚酰胺, 尼龙, PA, 呋喃二甲酸, FDCA, 呋喃二酸, 四氢呋喃二甲酸, 环己烷二甲酸, CHDA, 戊二胺, 五亚甲基二胺, 二氨基戊烷, PMD, 熔点, 吸水性, 低吸水, 吸水率低, 耐热, 生物质, 生物基, 阻燃, 对苯二甲酸, TPA, 3238-40-2, 1076-97-7, 462-94-2, polyamide, PA, nylon, furan diacid, furandicarboxylic acid, pentane diamine, pentanediamine, cyclohexane dicarboxylic acid, terephthalic acid, water absorption, melting point, heat resist+

### C. DOCUMENTS CONSIDERED TO BE RELEVANT

| Category* | Citation of document, with indication, where appropriate, of the relevant passages | Relevant to claim No. |
| --- | --- | --- |
| PX | CN 113896886 A (ZHUHAI WANTONG SPECIAL ENGINEERING PLASTIC CO., LTD. et al.) 07 January 2022 (2022-01-07) <br> claims 1-10 | 1-10 |
| Y | JP 2013006963 A (UNITIKA LTD.) 10 January 2013 (2013-01-10) <br> description, paragraphs 9, 13, 15, 20-24 and 28, and embodiment 1 | 1-10 |
| Y | CN 103403063 A (ASAHI KASEI CHEMICALS CORP.) 20 November 2013 (2013-11-20) <br> description, paragraphs 74 and 102, and embodiment 1 | 1-10 |
| Y | TW 201120095 A (ASAHI KASEI CHEMICALS CORP.) 16 June 2011 (2011-06-16) <br> table 1, embodiment 1 | 1-10 |
| A | JP 2013127059 A (TORAY INDUSTRIES) 27 June 2013 (2013-06-27) <br> entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 November 2022** | **29 November 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2022/118965** |

**C.    DOCUMENTS CONSIDERED TO BE RELEVANT**

| Category* | Citation of document, with indication, where appropriate, of the relevant passages | Relevant to claim No. |
|---|---|---|
| A | CN 102850541 A (TORAY FIBERS & TEXTILES RESEARCH LABORATORIES (CHINA) CO., LTD.) 02 January 2013 (2013-01-02)<br>      entire document | 1-10 |
| A | US 2015044927 A1 (E. I. DU PONT DE NEMOURS AND COMPANY) 12 February 2015 (2015-02-12)<br>      entire document | 1-10 |
| A | JP 5497921 B2 (ASAHI KASEI CHEMICALS CORPORATION) 21 May 2014 (2014-05-21)<br>      entire document | 1-10 |
| A | US 2016251479 A1 (FURANIX TECHNOLOGIES B.V.) 01 September 2016 (2016-09-01)<br>      entire document | 1-10 |
| A | CN 111925521 A (CHINA NATIONAL PETROLEUM CORP.) 13 November 2020 (2020-11-13)<br>      entire document | 1-10 |
| A | CN 112300384 A (BEIJING LVCHENG BIOMATERIAL TECHNOLOGY CO., LTD.) 02 February 2021 (2021-02-02)<br>      entire document | 1-10 |
| A | CN 103732653 A (TORAY INDUSTRIES, INC.) 16 April 2014 (2014-04-16)<br>      entire document | 1-10 |
| A | CN 106536187 A (DUPONT DE NEMOURS, INC.) 22 March 2017 (2017-03-22)<br>      entire document | 1-10 |
| A | CN 104017204 A (ZHUHAI WANTONG CHEMICAL CO., LTD. et al.) 03 September 2014 (2014-09-03)<br>      entire document | 1-10 |
| A | CN 103113577 A (SUZHOU UHNHI CHEMICAL CO., LTD.) 22 May 2013 (2013-05-22)<br>      entire document | 1-10 |
| A | CN 110790920 A (KINGFA SCIENCE AND TECHNOLOGY CO., LTD. et al.) 14 February 2020 (2020-02-14)<br>      entire document | 1-10 |
| A | CN 110684190 A (ZHEJIANG SHINY NEW MATERIALS CO., LTD.) 14 January 2020 (2020-01-14)<br>      entire document | 1-10 |
| A | 孙学科等 (SUN, Xueke et al.). "基于PA10T的生物基耐高温聚酰胺的合成 (Synthesis of Bio-based Heat-Resistant Polyamides Based on PA10T)"<br>工程塑料应用 (Engineering Plastics Application),<br>Vol. 45, No. 02, 10 February 2017 (2017-02-10),<br>ISSN: 1001-3539,<br>      pages 4-8 and 19 | 1-10 |

Form PCT/ISA/210 (second sheet) (January 2015)

<div align="center">

**INTERNATIONAL SEARCH REPORT**
Information on patent family members

</div>

| | International application No. |
|---|---|
| | **PCT/CN2022/118965** |

| Patent document cited in search report | | | Publication date (day/month/year) | Patent family member(s) | | | Publication date (day/month/year) |
|---|---|---|---|---|---|---|---|
| CN | 113896886 | A | 07 January 2022 | None | | | |
| JP | 2013006963 | A | 10 January 2013 | None | | | |
| CN | 103403063 | A | 20 November 2013 | US | 2014039120 | A1 | 06 February 2014 |
| | | | | EP | 2687555 | A1 | 22 January 2014 |
| | | | | WO | 2012124740 | A1 | 20 September 2012 |
| | | | | JP | WO2012124740 | A1 | 24 July 2014 |
| | | | | CN | 103403063 | B | 20 January 2016 |
| TW | 201120095 | A | 16 June 2011 | WO | 2011030742 | A1 | 17 March 2011 |
| | | | | CN | 102482415 | A | 30 May 2012 |
| | | | | KR | 20120040736 | A | 27 April 2012 |
| | | | | US | 2012165466 | A1 | 28 June 2012 |
| | | | | EP | 2476717 | A1 | 18 July 2012 |
| | | | | JP | 5105563 | B2 | 26 December 2012 |
| JP | 2013127059 | A | 27 June 2013 | None | | | |
| CN | 102850541 | A | 02 January 2013 | None | | | |
| US | 2015044927 | A1 | 12 February 2015 | ES | 2905350 | T3 | 08 April 2022 |
| | | | | CN | 104245793 | A | 24 December 2014 |
| | | | | CA | 2868286 | A1 | 03 October 2013 |
| | | | | EP | 4032935 | A1 | 27 July 2022 |
| | | | | JP | 2015514150 | A | 18 May 2015 |
| | | | | WO | 2013149180 | A1 | 03 October 2013 |
| | | | | MY | 171277 | A | 07 October 2019 |
| | | | | HK | 1205168 | A1 | 11 December 2015 |
| | | | | CN | 110229512 | A | 13 September 2019 |
| | | | | KR | 20150002703 | A | 07 January 2015 |
| | | | | SG | 11201405172 U | A | 26 September 2014 |
| | | | | EP | 2831145 | A1 | 04 February 2015 |
| | | | | IN | 7041DEN2014 | A | 10 April 2015 |
| JP | 5497921 | B2 | 21 May 2014 | EP | 2662397 | A1 | 13 November 2013 |
| | | | | CN | 103314034 | A | 18 September 2013 |
| | | | | US | 2013261256 | A1 | 03 October 2013 |
| | | | | WO | 2012093722 | A1 | 12 July 2012 |
| | | | | KR | 20130086067 | A | 30 July 2013 |
| US | 2016251479 | A1 | 01 September 2016 | EP | 3060598 | A1 | 31 August 2016 |
| | | | | WO | 2015059047 | A1 | 30 April 2015 |
| CN | 111925521 | A | 13 November 2020 | None | | | |
| CN | 112300384 | A | 02 February 2021 | None | | | |
| CN | 103732653 | A | 16 April 2014 | KR | 20140051930 | A | 02 May 2014 |
| | | | | EP | 2746315 | A1 | 25 June 2014 |
| | | | | JP | 5246385 | B1 | 24 July 2013 |
| | | | | TW | 201311763 | A | 16 March 2013 |
| | | | | WO | 2013024593 | A1 | 21 February 2013 |
| | | | | US | 2014194570 | A1 | 10 July 2014 |
| CN | 106536187 | A | 22 March 2017 | US | 2017210851 | A1 | 27 July 2017 |
| | | | | JP | 2017524576 | A | 31 August 2017 |
| | | | | EP | 3736128 | A1 | 11 November 2020 |
| | | | | US | 2022111618 | A1 | 14 April 2022 |
| | | | | WO | 2016019267 | A1 | 04 February 2016 |

Form PCT/ISA/210 (patent family annex) (January 2015)

INTERNATIONAL SEARCH REPORT
Information on patent family members

International application No.

**PCT/CN2022/118965**

| Patent document cited in search report | | | Publication date (day/month/year) | Patent family member(s) | | | Publication date (day/month/year) |
|---|---|---|---|---|---|---|---|
| | | | | EP | 3174708 | A1 | 07 June 2017 |
| | | | | KR | 20170037966 | A | 05 April 2017 |
| | | | | US | 2020247953 | A1 | 06 August 2020 |
| | | | | JP | 2022000352 | A | 04 January 2022 |
| | | | | CN | 106536187 | B | 31 December 2019 |
| CN | 104017204 | A | 03 September 2014 | CN | 104017204 | B | 17 November 2017 |
| CN | 103113577 | A | 22 May 2013 | CN | 103113577 | B | 20 May 2015 |
| CN | 110790920 | A | 14 February 2020 | CN | 110790920 | B | 10 June 2022 |
| CN | 110684190 | A | 14 January 2020 | CN | 110684190 | B | 08 April 2022 |

Form PCT/ISA/210 (patent family annex) (January 2015)

## REFERENCES CITED IN THE DESCRIPTION

**Patent documents cited in the description**

- CN 106536187 A